# EUROPEAN PATENT APPLICATION

(11) **EP 1 810 572 A1**
(43) Date of publication of application: **25.07.2007**
(21) Application number: 07000006.2
(22) Date of filing: 02.01.2007
(51) Int. Cl.: A21D 13/00, A21D 6/00, A21D 10/02

(54) **Filled pastry and relative manufacturing process**

(30) Priority: 13.01.2006 IT ge20060004
(71) Applicant: SUPER CROISSANT S.n.c. di Marsili G. & C., 19038 Sarzana SP (IT)
(72) Inventor: Marsili, Roberto, 19038 Sarzana (SP) (IT)
(74) Representative: Sergio, Stefano

(57) **Abstract**

Filled pastry comprising a pastry base (2), raised, puff or short crust, for breakfast, to be leavened, ready to cook, cooked, sweet or savoury, on which there are created at least two hollow, cylindrical elements (3, 4) arranged parallel to one another, inside each of which is inserted a filling.

## Description

This invention refers to a process for the manufacturing of a filled pastry in which such pastry may be for instance raised, puff or short crust, for breakfast, to be leavened, ready to cook, cooked, sweet or savoury pastry. The products currently present on the market refer to filled pastries in which the flavours of the fillings are amalgamated with one another into a single element of containment or seat created for instance by rolling the pastry into the shape of a "cannolo" or in other equivalent ways.

This invention instead refers to a product having two fillings separate from one another created on the same pastry.

Furthermore, the invention refers to the manufacturing process for the filled pastry, in which starting from a single pastry base that is substantially rectangular one creates fillings incorporated in two different and separate parts, that can be made through the rolling and closing carried out with pairs of ploughshares at the opposite extremities of the pastry base itself.

These and other aims, according to the invention, are reached by creating a process for the creation of a filled pastry according to the attached claims.

Further features and advantages of the pastry and the relative process according to this invention will be more clearly evident from the following description, giving examples but not limited, referred to the schematic drawings attached, in which:

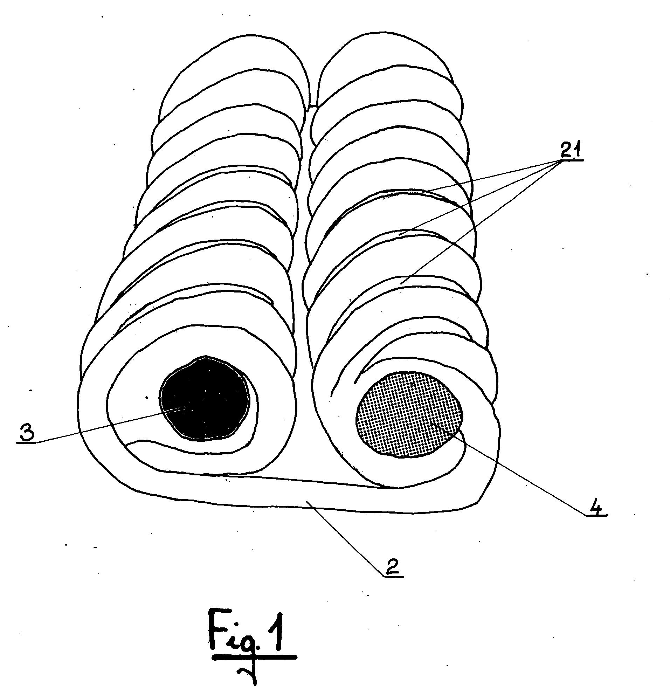

Figure 1 shows a cross section of the filled pastry manufactured using the process described in this invention.

With reference to the above mentioned figure, the filled pastry according to this invention includes a pastry base 2, preferably rectangular or quadrangular in shape and of suitable thickness, on the internal or external surface of which decorations 21 may be applied, such as for instance lines, grooves, carving, rhombuses, opposing lines or other ornamental elements which include any combinations of the above mentioned types of decoration.

The pastry includes at least two hollow, cylindrical elements 3 and 4, preferably arranged parallel to one another, on the inside of which is inserted a filling; preferably the fillings are of different flavours from the other.

This filled pastry is created through the following manufacturing process.

In a first phase, the dough is made which gives origin to the base of the pastry through the insertion of the powdered components in a mixer, for instance with a spiral. Cuttings from pastry obtained from previous processing may be advantageously added to such dough. During the rotation of the pastry mixer, which may even take place at differentiated speeds one adds water to the dough until an optimal consistency is obtained. This phase ends when the gluten is made in a satisfactory way; this may be checked by taking a small portion of the dough and flattening it to check the presence of a film that may even be very thin.

This phase, if carried out at the second speed may last on average from 18 to 22 minutes, depending on the quantity and consistency of the pastry scraps added.

When the dough is ready the rotation speed is slowed and oil is added to encourage detachment of the dough from the sides of the bowl.

Then, in a second phase, having completed the dough generation phase, the bowl is emptied by means of a lifter into the funnel of the extruder, in such way as to form a sheet on a conveyor belt.

At this point a layer of margarine is extruded with a predetermined thickness, for instance 1.2 cm so as to reach a margarine/pastry ratio of about 1/3 in weight (for example 350 g of margarine - 1 kg of pastry). By means of a pair of ploughshares, the margarine is closed in by the sheet of pastry and by means of the aforesaid conveyor belt the sheet is taken to the next phase of lamination.

Then, in a first phase of lamination, pearls of pastry are formed which can be passed to a further processing phase or they may be placed onto trays previously covered in flour and taken to a refrigerator for instance at a temperature of 4°C for a period of rest before the final processing.

A second phase of lamination envisages that the pastry pearls are covered in the centre with the cuttings from the production and therefore with the data relative to the technical form of the specific product, the pastry is then made to form a homogeneous sheet.

From the pastry sheet obtained through the second lamination, the pastry is once again calibrated in thickness, until arriving, for instance at about 2.6 millimetres.

Going through a special decorating roller, the sheet may be decorated on the upper or lower surface with all the types of design available, then, through a number of cutting knives, the strips of pastry are formed on which one has preferably created a series of markings. The strips of pastry are then cut or engraved on the edges and in the centre by means of a series of wheels with blades.

Using a suitable dose measurer the fillings are created, for example by means of continuous or alternate squirts, in proximity for instance of the longer edges of the strips obtained.

Then, by means of groups of ploughshares, each strip of pastry is folded and sealed around the fillings. In particular, the two edges are folded over onto themselves towards the middle of the strip, in such way that each of them covers the filling. Then the pastry strips are lined up and compacted by means of aligners.

Once the filled strips have been created and compacted, they are cut or cut and closed by means of crimping of the shorter sides depending on whether the fillings are continuous or alternated, with a cutter in a multitude of parts to form a filled pastry in each, for instance forming pieces of about 12 cm each. Alternatively, the size of the pieces may vary by setting the cutting knives, the aligners and the cutter in a differentiated way.

The filled pastry obtained is at this point preferably spread or sprayed with syrup and dusted with sugar or with a mixture of sugars to then go to deep freezing or packaging or to cooking and packaging.

From the description carried out, the features of the process and the product, subject of this invention, are clear just as the advantages are.

Finally, it is clear that numerous other variations can be made to the process and the product in question, without for this reason leaving the principles of novelty implied in the inventive idea, just as it is clear that in the practical activation of the invention, the materials, the shapes and the sizes of the details illustrated may be of whatsoever type depending on the needs and the same may be substituted with others that are technically equivalent.

## Claims

1. Filled pastry comprising a pastry base (2), raised, puff or short crust, for breakfast, to be leavened, ready to cook, cooked, sweet or savoury, **characterised by** the fact that on it there are created at least two hollow, cylindrical elements (3, 4) arranged substantially parallel to one another, inside each of which is inserted a filling.

2. Filled pastry according to claim 1, in which the base is of a rectangular or quadrangular shape.

3. Filled pastry according to claim 1, in which the fillings are of different flavours from one another.

4. Filled pastry according to claim 1, in which on the internal and external surface decorations (21) may be carried out, such as for instance lines, grooves, carvings, opposing lines or other ornamental elements which include any combination of the above mentioned types of decoration.

5. Process for the manufacturing of a filled pastry including the phase of creating the dough by means of mixing the powdered components for the pastry and mixing with the addition of water, **characterised by** the fact of comprising the following phases:
• forming, starting from such dough, a multitude of pastry strips,
• placing filling in proximity of the longer edges of the pastry strips obtained,
• folding and sealing each of these fillings with the pastry strip starting from the edges toward the middle of the strip, in such way that each of the edges folded encloses a filling.

6. Process according to claim 5, **characterised by** the fact of further comprising the phase of decorating the lower and upper surface of said strip.
